# EUROPÄISCHE PATENTSCHRIFT

(11) **EP 2 808 960 B1**
(45) Veröffentlichungstag und Bekanntmachung des Hinweises auf die Patenterteilung: **13.07.2016**
(21) Anmeldenummer: 13169404.4
(22) Anmeldetag: 27.05.2013
(51) Int. Cl.: H02G 3/06

(54) **Vorrichtung zum Verbinden von Kabelbahnabschnitten und Kabelbahn**
Device for connecting cable path sections and cable path
Dispositif de liaison de sections de bandes de câble et bande de câble

(43) Veröffentlichungstag der Anmeldung: 03.12.2014
(73) Patentinhaber: Zurecon AG, 8003 Zürich (CH)
(72) Erfinder: Pfluger, Gerd, 4625 Oberbuchsiten (CH)
(74) Vertreter: Rutz & Partner

(56) Entgegenhaltungen:
- EP-A1- 0 461 974
- EP-A1- 1 815 572
- FR-A1- 2 611 830
- FR-A1- 2 961 962

## Beschreibung

Die Erfindung betrifft eine Vorrichtung zum Verbinden von Kabelbahnabschnitten und eine mit wenigstens einer solchen Vorrichtungen versehene Kabelbahn.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in metallene Kabelbahnen gelegt und so beispielsweise von einem Schaltfeld oder einer Zentrale zu den Verbrauchern geführt. Kabelbahnen dieser Art, die aus einzelnen Abschnitten zusammengesetzt werden, sind beispielsweise aus dem [1] Produktkatalog der LANZ OENSINGEN AG, Juni 2009, bekannt. Zur Verbindung der Kabelbahnabschnitte sind Vorrichtungen verwendbar, die ebenfalls in diesem Produktekatalog beschrieben sind.

Aus [2], EP1049226A2, ist eine solche Verbindungsvorrichtung bekannt, mittels der stirnseitig aneinander anstossende, mit Wandöffnungen versehene Seitenwände benachbarter Kabelbahnabschnitte miteinander verbindbar sind. Die Verbindungsvorrichtung umfasst Verbindungsplatten, die an der Unterseite mit Haken versehen sind. Zur Installation der Verbindungsplatten an den Aussenseiten der Seitenwände werden die Haken von oben in die Wandöffnungen eingeführt und nach unten gegen den Boden des Kabelkanals geschoben. In der Folge werden die Verbindungsplatten anhand eines Sicherungsmittels fixiert, das drehbar oder verschiebbar mit der Verbindungsplatte verbunden ist und zum Beispiel in den Abschlussrand der Seitenwand eingehängt wird. Mit dem Sicherungsmittel werden somit Gelenk-, Scharnier- oder Schieberfunktionen realisiert, weshalb feingliederige Vorrichtungsteile erforderlich sind, die erheblichen Belastungen standhalten müssen. Aufgrund des Zusammenwirkens mit der Seitenwand ist diese Verbindungsvorrichtung zudem nicht universell einsetzbar. Zu beachten ist ferner, dass Krafteinwirkungen auf die Kabelbahn, insbesondere Schwingungen in vertikaler Richtung, zumindest teilweise durch die Sicherungsmittel aufgefangen werden müssen, um zu verhindern, dass die Verbindungsplatten in vertikaler Richtung nach oben geschoben werden und die Haken sich aus den Wandöffnungen lösen. Auf die Sicherungsmittel können daher grössere Kräfte einwirken, weshalb diese robust auszugestalten sind, damit keine Fehlfunktionen auftreten. Diese Verbindungsvorrichtung ist daher relativ aufwendig ausgestaltet und mit entsprechendem Aufwand zu bedienen.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung. Ein oft wünschbares Zuschneiden der Kabelbahnabschnitte vor Ort ist nicht möglich, weshalb ein idealer Verlauf der Kabelbahn gegebenenfalls nicht realisiert werden kann.

Die EP0461974A1 offenbart eine Schiene für einen Kabelkanal nach dem Oberbegriff des Anspruchs 1, die an verschiedenen Orten verteilte Perforationen aufweist, die so beschaffen sind, dass sie aufliegend auf einer Platine mindestens zwei Haken tragen, die zum Verbinden mit zwei Teilstücken des Kabelkanals ausgelegt sind, von einem Basisteil auskragend und dazu bestimmt sind, nach dem Durchdringen der jeweiligen Perforation des korrespondierenden Teilstückes des Kabelkanals gekrümmt zu werden.

Die EP1815572A1 offenbart eine Vorrichtung zum Verbinden von Kabelkanalabschnitten, die eine Verbindungsplatte mit einer Mehrzahl von Öffnungen und eine korrespondierende Mehrzahl von Schrauben umfasst, die in die Öffnungen eingesetzt und mit dem korrespondierenden Kabelkanalabschnitte verbunden werden.

Der vorliegenden Erfindung liegt daher die Aufgabe zugrunde, eine verbesserte Verbindungsvorrichtung für Kabelbahnabschnitte sowie eine verbesserte Kabelbahn mit Kabelbahnabschnitten zu schaffen, die mit wenigstens einer solchen Verbindungsvorrichtungen miteinander verbunden sind.

Insbesondere ist eine Verbindungsvorrichtung zu schaffen, die eine stabile Verbindung zwischen zwei Kabelbahnabschnitten ermöglicht. Die stabile Verbindung soll mit einfachen Mitteln erzielt werden und auch grösseren Krafteinwirkungen auf die Kabelbahnabschnitte standhalten.

Die Verbindungsvorrichtung soll keine Änderungen an den Kabelbahnabschnitten erfordern, so dass beliebige und gegebenenfalls am Installationsort in der Länge zugeschnittene Kabelbahnabschnitte miteinander verbindbar sind. Insbesondere sollen auch beidseits identische Kabelbahnabschnitte miteinander verbindbar sein.

Die Verbindungsvorrichtung soll einfach und robust aufgebaut sein und mit geringem Aufwand gefertigt und installiert werden können.

Diese Aufgabe wird mit einer Verbindungsvorrichtung und einer Kabelbahn gelöst, welche die in Anspruch 1 bzw. 12 angegebenen Merkmale aufweisen. Vorteilhafte Ausgestaltungen der Erfindung sind in weiteren Ansprüchen angegeben.

Die Vorrichtung dient dem Verbinden wenigstens eines ersten und eines zweiten Kabelbahnabschnitts, die je wenigstens ein Bodenelement und beidseits daran anschliessende erste und zweite Seitenwände umfassen und die nach deren Verbindung koaxial zu einer gemeinsamen Bahnachse ausgerichtet eine Kabelbahn bilden.

Die Verbindungsvorrichtung umfasst eine erste und eine zweite Verbindungsplatte, welche die Endbereiche der einander zugewandten ersten bzw. zweiten Seitenwände beider Kabelbahnabschnitte übergreifen und die je eine Reihe von Haken aufweisen, die in Wandöffnungen eingreifen können, die in den Seitenwänden der Kabelbahnabschnitte vorgesehen sind, und die je mittels wenigstens eines Verbindungselements fixierbar sind.

Erfindungsgemäss sind die an der ersten Verbindungsplatte vorgesehenen Haken und die an der zweiten Verbindungsplatte vorgesehenen Haken zumindest annähernd parallel zur Bahnachse ausgerichtet und weisen in entgegengesetzte Richtungen.

Mittels jeder erfindungsgemässen Verbindungsvorrichtung können zwei Kabelbahnabschnitte stabil miteinander verbunden werden. Die Verbindungsplatten können mit wenigen Handgriffen mit den einander zugewandten Seitenwänden der beiden Kabelbahnabschnitte verbunden und fixiert werden.

Mittels der stabilen Verbindungsplatten werden die Seitenwände der Kabelbahn im Bereich der Verbindung zusammengehalten und verstärkt. Teile der Verbindungsplatten, nämlich die Haken, greifen formschlüssig in die Wandöffnungen der Seitenwände ein, wodurch die Verbindungsplatten in die Seitenwand integriert sind.

Durch die axiale Ausrichtung der Haken wird sichergestellt, dass diese sich auch bei grösseren vertikalen Bewegungen und Schwingungen der Kabelbahnabschnitte, wie sie in der Praxis typischerweise auftreten, nicht aus den Wandöffnungen lösen können. Auch Deformationen oder eine Zerstörung der Verbindungsvorrichtung bei stärkeren Krafteinwirkungen werden bei der erfindungsgemässen Verbindungsvorrichtung vermieden.

Durch die Ausrichtung der Haken parallel zur Bahnachse können diese zudem leicht in die Seitenwände eingefügt werden. In der Folge liegen die Verbindungsplatten an den zugehörigen Seitenwänden an und erhöhen deren Stabilität. Durch die Ausrichtung der Haken in entgegengesetzte Richtungen wird eine stabile Verbindung erzielt, die verhindert, dass die beiden miteinander verbundenen Kabelbahnabschnitte relativ zueinander verschoben werden können. Mit der erfindungsgemässen Verbindungsvorrichtung erfolgt somit eine zuverlässige Sicherung in beide Richtungen entlang der Bahnachse.

Die Verbindungsvorrichtung kann wahlweise an unterschiedliche Kabelbahnen bzw. Kabelbahnabschnitte angepasst werden, die gelochte Seitenwände aufweisen. Für die Befestigung der Verbindungsplatten sind keine weiteren Elemente der Kabelbahnabschnitte erforderlich.

Die Kabelbahnabschnitte können beidseitig beliebig, d.h. auch identisch ausgestaltet sein, weshalb für die Realisierung der Verbindung kein zusätzlicher Herstellungsaufwand resultiert. Die Verbindungsvorrichtung ist daher praktisch universell einsetzbar. Bedarfsweise kann ein Kabelbahnsegment am Installationsort auf eine gewünschte Länge zugeschnitten werden, um eine Lücke zu schliessen. In der Folge kann der zugeschnittene Kabelbahnabschnitt ohne besondere Vorkehrungen anhand von zwei erfindungsgemässen Verbindungsvorrichtungen beidseitig mit weiteren Kabelbahnabschnitten verbunden werden.

Die Verbindungsvorrichtung kann auf verschiedene Arten montiert werden. Die erste und die zweite Verbindungsplatte können wahlweise mit dem ersten oder dem zweiten Kabelbahnabschnitt verbunden werden. Weiterhin können die erste und die zweite Verbindungsplatte an der Innenseite oder der Aussenseite der zugehörigen Seitenwände angeordnet werden. Die Montageart wird unter Berücksichtigung der Ausgestaltung der Verbindungsplatten derart gewählt, dass die installierten Kabel keine Hindernisse innerhalb der Kabelbahn finden. Sofern der optische Eindruck der resultierenden Kabelbahn besonders wesentlich ist, wird vorzugsweise vorgesehen, dass die dem Betrachter zugewandte Verbindungsplatte auf der Innenseite der Kabelbahn angeordnet wird. Sofern die Handhabung und die Inspektion der Kabelbahn besonders einfach erfolgen sollen, so werden die Verbindungsplatten vorzugsweise auf der Aussenseite der Kabelbahn angeordnet.

Die Verbindungsplatten werden vorzugsweise derart angeordnet, dass die erste und zweite Verbindungsplatte die einander zugewandten ersten bzw. zweiten Seitenwände der Kabelbahnabschnitte etwa um dasselbe Mass überlappen. Vorzugsweise greifen die erste und die zweite Verbindungsplatte daher mit derselben Anzahl Haken in die einander zugewandten ersten bzw. zweiten Seitenwände der Kabelbahnabschnitte ein.

Damit die einzelnen Haken nicht zu stark belastet werden, ist vorzugsweise eine höhere Anzahl, vorzugsweise eine gerade Anzahl davon vorgesehenen. Beispielsweise werden wenigstens vier, vorzugsweise jedoch sechs bis zwölf Haken vorgesehen.

Die Haken weisen denselben Rasterabstand auf, wie die zugeordneten Wandöffnungen in den ersten und zweiten Seitenwänden und sind vorzugsweise entlang einer Gerade ausgerichtet.

Zur Fixierung der Verbindungsplatten an den Seitenwänden sind diese je mit wenigstens einer beispielsweise rechteckförmigen Montageöffnung versehen, die im Rasterabstand der Haken angeordnet ist. Die Montageöffnung dient der Aufnahme wenigstens eines Verbindungselements. Alternativ ist aus der Montageöffnung ein Verbindungselement teilweise ausgeschnitten, das in eine der Wandöffnungen umgebogen ist oder umgebogen werden kann.

Das Verbindungselement ist beispielsweise ein Bolzen, der anschliessend an einen Gewindeschaft ein vorzugsweise rechteckiges Schaftelement aufweist, das formschlüssig in die Montageöffnung der ersten bzw. zweiten Verbindungsplatte einführbar ist. Der Bolzen bleibt daher drehfest gehalten während eine Schraubenmutter angezogen wird.

In einer weiteren vorzugsweisen Ausgestaltung sind die Haken federelastisch ausgestaltet, so dass sie mit Kopplungselementen zusammenwirken können, die mit minimalem Aufwand an den Seitenwänden vorgesehen werden können. Beispielsweise weisen die vorzugsweise zungenförmigen Haken frontseitig Verbiegungen auf, die in Öffnungen oder Einformungen in den Seitenwänden eingreifen können. Die Verbindungsplatten werden daher durch die federelastischen Haken selbst gehalten und können daher auch ohne weitere Verbindungsmittel mit den Kabelbahnabschnitten fest verbunden werden.

Die erfindungsgemässe Verbindungsvorrichtung kann zur Verbindung beliebiger Kabelbahnabschnitte verwendet werden. Beispielsweise können Kabelbahnabschnitte miteinander verbunden werden, die aus einem Gitter mit Längsstegen und Querstegen gefertigt sind; oder die einstückig aus einem Metallblech geformt sind; oder die aus Metallblech geformte Seitenwände aufweisen, die durch Stege, wie metallene C-Profilträger, miteinander verbunden sind, die das Bodenelement bilden.

Nachfolgend wird die Erfindung anhand von Zeichnungen näher erläutert. Dabei zeigt:
- Fig. 1: eine erfindungsgemässe Kabelbahn 1 mit einem ersten und einem zweiten Kabelbahnabschnitt 1A, 1B, welche anhand einer erfindungsgemässen Verbindungsvorrichtung 1 miteinander verbunden sind, die eine erste und eine zweite Verbindungsplatte 21, 22 aufweist;
- Fig. 2: die Kabelbahn 1 von Figur 1 von der anderen Seite;
- Fig. 3: die Kabelbahn 1 von Figur 1 nach der Entnahme des ersten Kabelbahnabschnitts 1A;
- Fig. 4: eine Verbindungsvorrichtung 1 mit zwei Verbindungsplatten 21, 22 in einer vorzugsweisen Ausgestaltung 1;
- Fig. 5: eine der Verbindungsplatten 22 mit federelastischen Haken 221 die durch eine erste Wandöffnung 121 durch die Seitenwand 12 hindurch geführt sind und mit einem frontseitigen Endstück 2210 in eine zweite Wandöffnung 122 eingreifen; und
- Fig. 6: zwei identische Verbindungsplatten 21, 22 mit je sieben ersten Haken 211 bzw. 221 und einem achten Haken bzw. einem Verbindungshaken 250, der als Verbindungselement zur Orientierung der zugehörigen Verbindungsplatte 21 bzw. 22 dient.

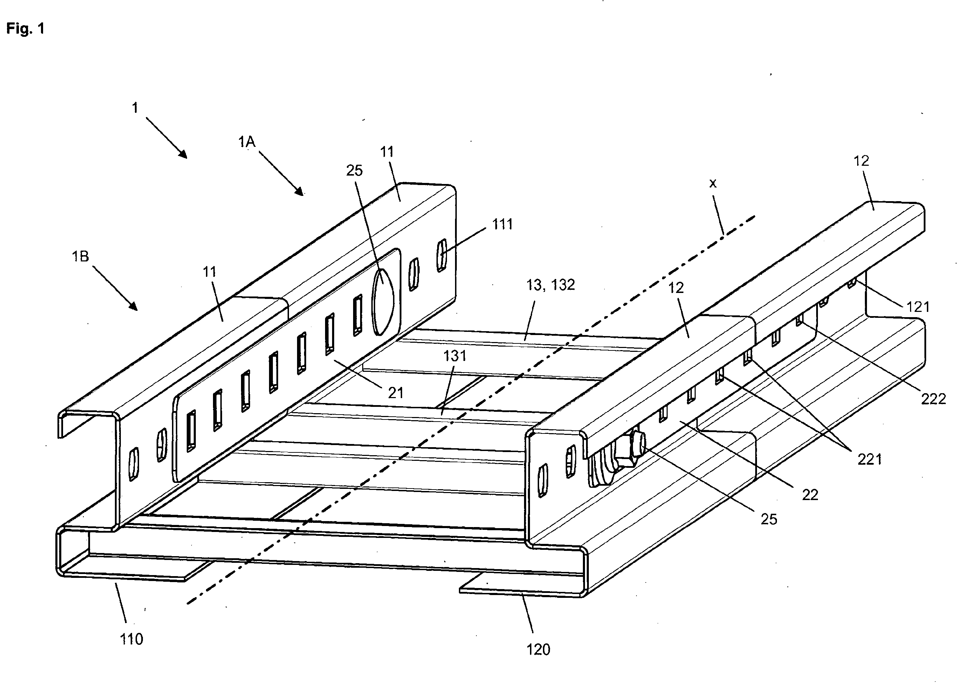

Figur 1 zeigt eine erfindungsgemässe Kabelbahn 1 mit zwei Kabelbahnabschnitten 1A, 1B, die durch eine erfindungsgemässe Verbindungsvorrichtung 1 miteinander verbunden und koaxial zu einer gemeinsamen Bahnachse x ausgerichtet sind.

Die Kabelbahnabschnitte 1A, 1B weisen zwei Seitenwände 11; 12 auf, an die unten Fusselemente 110; 120 anschliessen, die durch je zwei Bodenelemente 131, 132 miteinander verbunden sind. Die Bodenelemente 131, 132 weisen beispielsweise ein nach oben geöffnetes C-Profil auf, welches beidseits in den Fusselementen 110; 120 fest geklemmt ist.

Wesentlich für die Montage der erfindungsgemässen Verbindungsvorrichtung 1 ist, dass die Seitenwände 11, 12 der beiden Kabelbahnabschnitte 1A, 1B mit Wandöffnungen 111; 121 versehen sind. Sofern dieses Erfordernis erfüllt ist, lassen sich beliebige Kabelbahnabschnitte anhand der erfindungsgemässen Verbindungsvorrichtung 1 miteinander verbinden. Ein weiteres Zusammenwirken der Seitenwände 11, 12 mit der Verbindungsvorrichtung 2 ist nicht erforderlich. Beispielsweise können auch einstückig aus Blech geformte oder aus Gitterstrukturen bestehende Kabelbahnabschnitte miteinander verbunden werden.

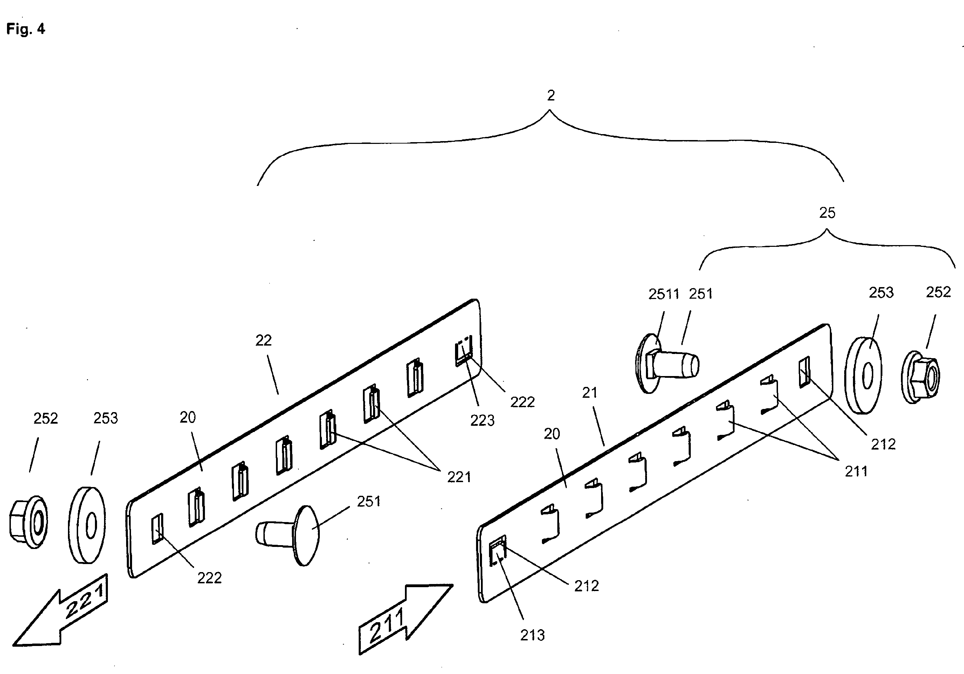

Die Verbindungsvorrichtung 1, durch die die beiden Kabelbahnabschnitte 1A, 1B miteinander verbunden sind, ist in Figur 4 in einer vorzugsweisen Ausgestaltung gesondert gezeigt. Die Verbindungsvorrichtung 1 umfasst zwei vorzugsweise identische Verbindungsplatten 21, 22, die in der vorliegenden Ausgestaltung je mit sieben Haken 211, 221 versehen sind, die in einem gleichmässigen Rasterabstand entlang einer Gerade angeordnet sind. Die Verbindungsplatten 21, 22 weisen einen langgestreckten, rechteckigen Grundkörper 20 auf, aus dem die Haken 211, 221 ausgeschnitten und nach aussen gebogen sind. Die Haken 211, 221 sind parallel zur Längsachse der Verbindungsplatten 21, 22 ausgerichtet. Wie dies in Figur 4 gezeigt ist (siehe auch die schematischen Pfeile), werden die Verbindungsplatten 21, 22 derart montiert, dass die Haken 211, 221, die in korrespondierende Wandöffnungen 111, 121 in den Seitenwänden 11, 12 eingeführt werden, in entgegengesetzte Richtungen weisen. Zur Montage wird eine Verbindungsplatte 21 bzw. 22 an die zugehörige Seitenwand 11 bzw. 12 angelegt und verschoben bis die Haken 211 bzw. 221. durch die korrespondierenden Wandöffnungen 111 bzw. 121 hindurch treten. Anschliessend wird die Verbindungsplatte 21 bzw. 22 verschoben, so dass die Haken 211 bzw. 221 die zugehörige Seitenwand 11 bzw. 12 überlappen.

Die Verbindungsplatten 21, 22 weisen in dieser Ausgestaltung ferner Montageöffnungen 212, 222 auf, in die z.B. ein Montagebolzen 251 einer Verbindungsgarnitur 25 einsetzbar ist, die nebst dem Montagebolzen 251 eine Schraubenmutter 252 und eine Unterlagscheibe 251 umfasst.

Die rechteckigen Montageöffnungen 212, 222 werden entweder vollständig ausgestanzt oder teilweise ausgeschnitten, so dass ein Flügelelement 213, 223 verbleibt, welches nach aussen in eine weitere Wandöffnung 111, 121 gebogen werden und alternativ oder zusätzlich als Verbindungselement dienen kann. Die Montageöffnungen 212, 222 sind im gleichen Rasterabstand angeordnet wie die Haken 211, 221 bzw. setzen deren Rasterabstand fort.

Die an den Seitenwänden 11, 12 montierten Verbindungsplatten 11, 12 können daher auf verschiedene Weise arretiert werden. Wie dies in Figur 1 gezeigt ist, können die Verbindungsplatten 21, 22 mit der Verbindungsgarnitur 25 fixiert werden.

Alternativ kann das als Verbindungselement dienende Flügelelement 213 bzw. 223 in die korrespondierende Wandöffnung 111, 121 hinein gebogen werden.

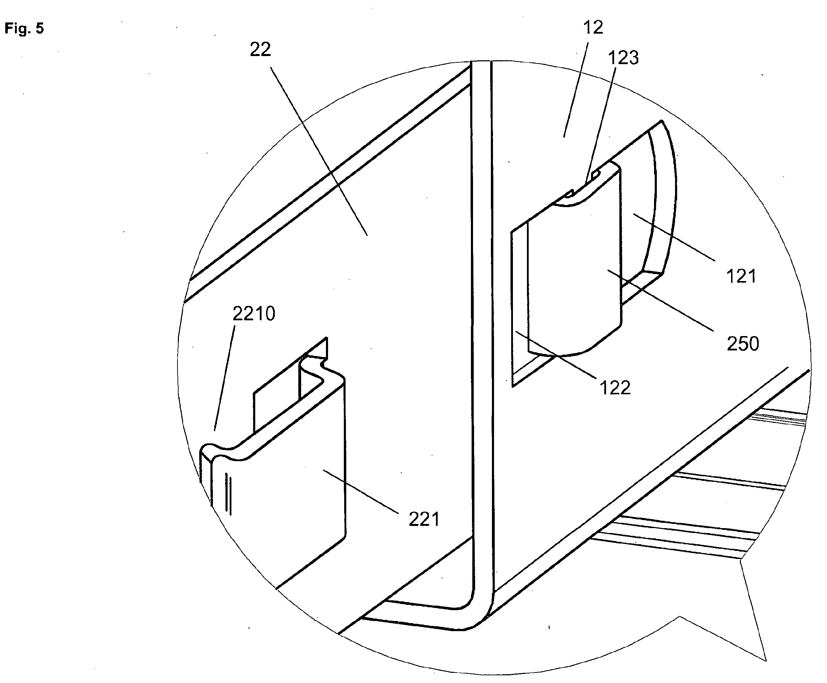

In einer weiteren vorzugsweisen Ausgestaltung kann jede der Verbindungsplatten. 21, 22 auch mittels wenigstens eines der Haken 211, 221 selbst gehalten werden, wie dies nachstehend mit Bezugnahme auf Figur 5 noch näher beschrieben wird. Beispielsweise wird der erste und oder der letzte der Haken 211 bzw. 221 als Verbindungshaken 250 ausgestaltet, der sich kraftschlüssig oder formschlüssig mit der zugewandten Seitenwand 111 bzw. 112 verbindet und sich vorzugsweise nicht selbsttätig lösen kann.

In Figur 1 ist weiter gezeigt, dass die Verbindungsplatten 21, 22 mit vier bzw. drei Haken 211; 221 in korrespondierende Wandöffnungen 111, 121 in den einander zugewandten Seitenwänden 11 bzw. 12 der beiden Kabelbahnabschnitte 1A, 1B eingreifen. Die Montagebolzen 251 der Verbindungsgarnituren 25, die verhindern, dass sich die Verbindungsplatten 21, 22 wieder von den Seitenwänden 11, 12 lösen können, sind durch die Montageöffnungen 221, 222 in den Verbindungsplatten 21, 22 (siehe Figur 4) sowie durch eine korrespondierende Wandöffnung 111, 121 hindurch geführt und mittels einer Schraubenmutter 252 festgezogen. Die Verbindungsplatten 21, 22 sind bereits durch die eine Verbindungsgarnitur 25 fixiert, weshalb auf der anderen Seite der Verbindungsplatten 21, 22 keine Verbindungsgarnitur 25 vorgesehen ist.

Die erste Verbindungsplatte 21 ist auf der Innenseite der Kabelbahn 1 angeordnet und von aussen nicht sichtbar. Durch die Verbindungsplatte 21 und den abgerundeten Kopf des Montagebolzens 251 resultieren innerhalb des Querschnitts der Kabelbahn 1 somit keine wesentlichen Hindernisse. Bei der Installation der Kabel treten daher keine Beschädigungen der Kabel, insbesondere des Kabelmantels auf.

Die zweite Verbindungsplatte 22 ist auf der Aussenseite der Kabelbahn 1 angeordnet und kann dadurch einfache, d.h. von der Seite, in die einander zugewandten Seitenwände 12 der Kabelbahnabschnitte 1A, 1B eingesetzt werden. Die Haken 221 liegen daher an der Innenseite der Seitenwände 12 an. Damit die innenliegenden Haken 221 nicht in Kontakt mit den Kabel treten, werden vorzugsweise parallel zu den Haken 221 eine oder mehrere Einprägungen in den Seitenwänden 12 vorgesehen, zwischen denen die Haken 221 eingebettet sind.

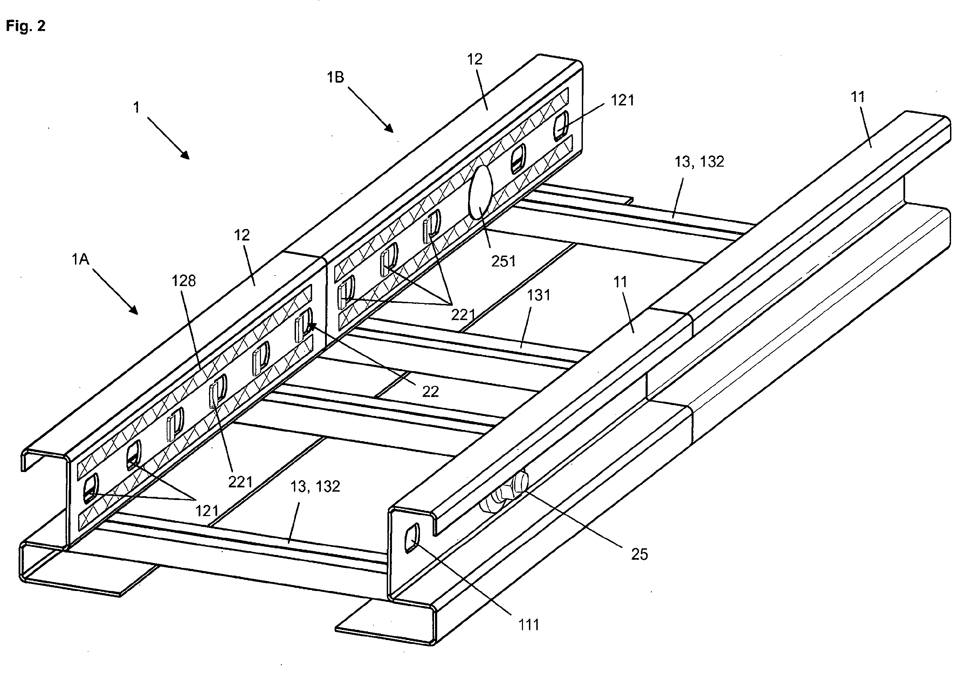

Figur 2 zeigt die Kabelbahn 1 von Figur 1 aus der entgegengesetzten Richtung. Es ist ersichtlich, dass die zweite Verbindungsplatte 22 je mit vier bzw. drei Haken 221 von der Aussenseite der Kabelbahn 1 in die zweiten Seitenwände 12 der des ersten und des zweiten Kabelbahnabschnitts 1A bzw. 1B eingreift. Die in den Querschnitt des Kabelkanals 1 hinein ragenden Haken 221 sind zwischen einer oberen und einer unteren Einprägung 128 eingebettet, die parallel zueinander entlang den Seitenwänden 12 verlaufen. Wesentlich ist hingegen, dass Einprägungen 128 wenigstens auf der Höhe der Haken 221 vorgesehen sind.

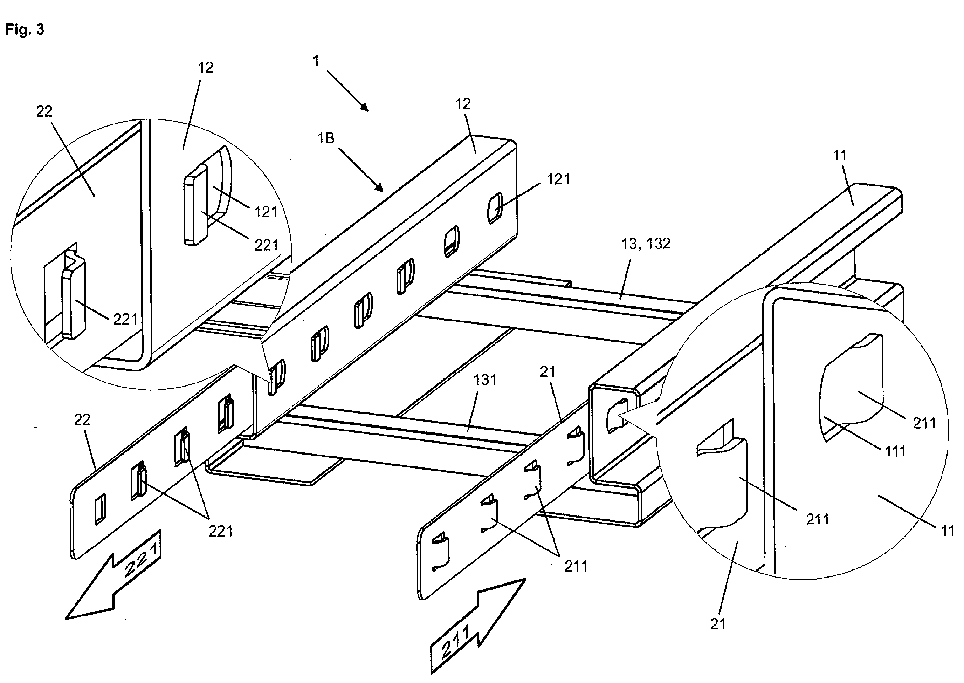

Figur 3 zeigt die Kabelbahn 1 von Figur 1 nach der Entnahme des ersten Kabelbahnabschnitts 1A. Es ist gezeigt, dass die beiden Verbindungsplatten 21, 22 bereits mit den Seitenwänden 11, 12 des zweiten Kabelbahnabschnitts 1B verbunden sind. In Detailansichten ist gezeigt, dass die parallel zueinander ausgerichteten Haken 221, 221 der beiden Verbindungsplatten 21, 22 in entgegengesetzte Richtungen weisen und die beiden Kabelbahnabschnitte 1A, 1B daher unabhängig von der Art und Richtung einer störenden Krafteinwirkung sicher halten können.

Figur 4 zeigt die Verbindungsvorrichtung 2 in einer vorzugsweisen Ausgestaltung. In der gezeigten Ausgestaltung umfasst die Verbindungsvorrichtung 2 zwei Verbindungsplatten 21, 22 und gegebenenfalls zwei Verbindungsgarnituren 25, die aus einem Montagebolzen 251, einer Schraubenmutter 252 und einer Unterlagscheibe 253 bestehen.

Die beiden Verbindungsplatten 21, 22 weisen je eine Grundplatte 20 auf, aus der die Haken 211 bzw. 221 ausgeschnitten sind. An beiden Enden weist jede Grundplatte 20 zudem vollständig oder teilweise ausgeschnittene, rechteckige Montageöffnungen 212 bzw. 222 auf. Die Montageöffnungen 212, 222 dienen der Durchführung der Montagebolzen 251, die in dieser Ausgestaltung anschliessend an den Gewindeschaft ein rechteckiges Schaftelement 2511 aufweisen, das formschlüssig in die zugehörige Montageöffnung 212, 222 einführbar ist. Der Bolzen 251 bleibt daher drehfest gehalten während die damit verbundene Schraubenmutter 252 angezogen wird.

In der gezeigten Ausgestaltung ist je eine Montageöffnung 212 bzw. 222 jeder Verbindungsplatte 21 bzw. 22 nur auf drei Seiten ausgeschnitten, so dass ein mit der vierten Seite verbundenes Flügelelement 213 bzw. 223 verblieben ist, welches entweder ausgebrochen wird, um die Montageöffnung 212 bzw. 222 vollständig freizulegen, damit ein Montagebolzen 251 hindurch geführt werden kann. Alternativ wird das Flügelelement 213 bzw. 223 nach aussen gebogen, so dass es anstelle des Montagebolzens 251 selbst als Verbindungselement dienen kann. Dazu wird die Verbindungsplatte 21 bzw. 22 derart auf die Seitenwand 11 bzw. 12 aufgesetzt, dass die Haken 211, 221 in die Wandöffnungen 111 bzw. 121 eingreifen. Anschliessend wird die Verbindungsplatte 21 bzw. 22 bis zum Endanschlag verschoben und dann fixiert, indem das Flügelelement in die benachbarte Wandöffnung 111 bzw. 121 hinein gebogen wird. In der Folge ist die Verbindungsplatte 21 bzw. 22 schraubenlos blockiert, so dass sie nicht zurück verschoben werden kann und sich die Haken 211, 221 nicht von der Seitenwand 11 bzw. 12 lösen können. Eine weitere Möglichkeit, die Verbindungsplatten 21, 22 zu fixieren ist in Figur 5 gezeigt.

Figur 5 zeigt die Verbindungsplatte 22 mit der geänderten Detailansicht von Figur 3. Darin ist gezeigt, dass die Seitenwand 12 an wenigstens einer Position paarweise mit ersten und zweiten Wandöffnungen 121, 122 versehen ist, die durch einen Steg 121 voneinander getrennt sind. Die Wandöffnungen 121, 123 bilden somit eine Doppellochung, die es erlaubt, einen Haken 211, 222 aufzunehmen und zu halten.

Wenigstens einer der Haken 221 der Verbindungsplatte 22 kann, wie zuvor beschrieben, durch die erste Wandöffnung 121 hindurch und über den Steg 123 in die zweite Wandöffnung 122 der Doppellochung eingeführt werden. Anstelle einer zweiten Wandöffnung 122 kann auch eine entsprechende Einformung vorgesehen werden, in die der Haken 221 mit seinem Endstück 2210 eingreifen kann.

Die Haken 221 sind vorzugsweise federelastisch ausgestaltet, so dass sie unter Druck in die erste Wandöffnung 121 eingeführt werden können und in der Folge relaxieren und dadurch in die zweite Wandöffnung 122 bzw. in die entsprechende Einprägung eingreifen. Dabei ist es möglich eine formschlüssige oder nur eine kraftschlüssige Verbindung der Haken 211 bzw. 221 mit der zugehörigen Seitenwand 11 bzw. 12 zu realisieren. Im ersten Fall werden die Haken 211 bzw. 221 innerhalb der Wandöffnungen 111 bzw. 121 blockiert und müssen manuell angehoben werden, um die Verbindungsplatte 21 bzw. 22 wieder zu lösen. Dabei kann vorgesehen werden, dass nur einer der Haken 211 bzw. 221, vorzugsweise der erste oder der letzte, für eine formschlüssige Verbindung ausgestaltet ist. Im zweiten Fall muss die Verbindungsplatte 21 bzw. 22 mit entsprechender Kraft wieder zurückgezogen werden.

Die vorzugsweise aus Federstahl gefertigte Verbindungsplatte 22 wird somit an die zugehörige Seitenwand 12 angedrückt und sicher gehalten. Die Verbindungsplatte 22 und die Seitenwand 12 können zudem zueinander korrespondierende Rillen oder Rippen aufweisen, die nach der Montage der Verbindungsplatte 22 eine formschlüssige Verbindung bilden.

Die Dimensionierung der Verbindungsplatten 21 bzw. 22 bezüglich Länge, Breite und Dicke sowie Materialbeschaffenheit wird anhand der erwarteten mechanischen Belastungen und der Witterungseinflüsse gewählt. Vorzugsweise weisen die Verbindungsplatten 21 bzw. 22 dieselben Eigenschaften und zumindest dieselbe Qualität auf, wie die Seitenwände 11, 12 der Kabelbahnabschnitte 1A, 1B.

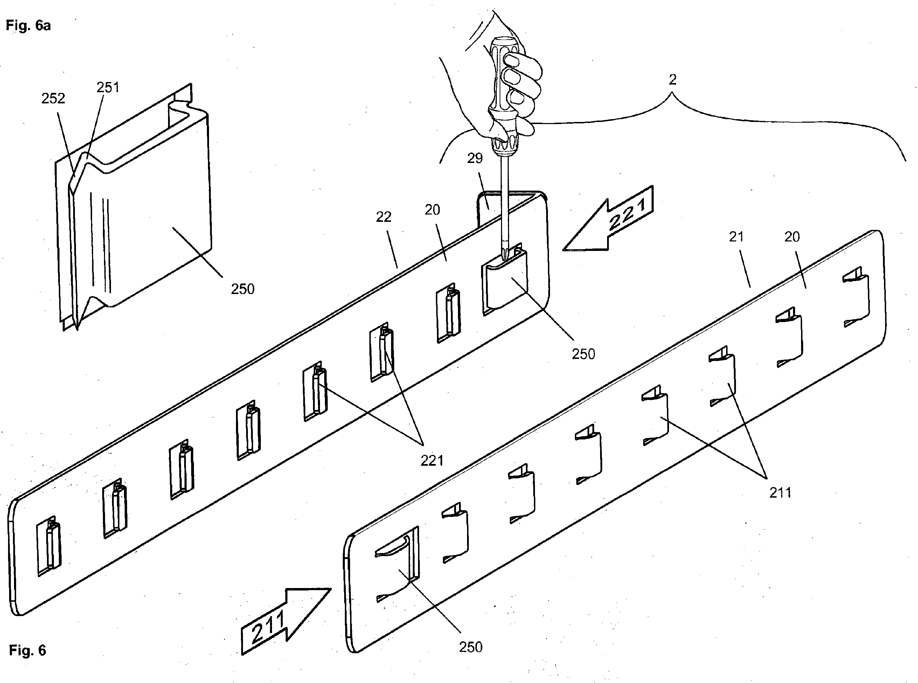

Figur 6 zeigt eine schraubenlose Verbindungsvorrichtung 2 mit zwei Verbindungsplatten 21 bzw. 22, die je sieben L-förmig ausgestaltete erste Haken 211 bzw. 221 und einen Verbindungshaken 250 aufweisen, der in eine Doppellochung mit zwei Wandöffnungen 121, 122 gemäss Figur 5 eingreifen und sich formschlüssig mit der Seitenwand 12 verbinden kann. Der Verbindungshaken 250 kann daher als Widerhaken dienen, der nur durch Eingriff mittels eines Werkzeugs wieder lösbar ist, wie dies in Figur 6 gezeigt ist.

Figur 6 zeigt ferner exemplarisch, dass die Verbindungsplatten 21, 22 mit einem Halteelement 29 versehen werden können, welches erlaubt, die Verbindungsplatten 21, 22 vor und zurück zu verschieben. In dieser Ausgestaltung wird die Verbindungsplatte 22 von aussen so weit gegen die Kanalwände 12 des ersten und zweiten Kabelbahnabschnitt 1A, 1B geführt, bis die Haken 221, 250 in die Wandöffnungen 121 eintreten. In der Folge wird die Verbindungsplatte 22 anhand des Halteelements 29 vor oder zurück verschoben.

Figur 6a eine vorzugsweise Ausgestaltung des Verbindungshakens 250, der eine rückwärtsweisende Nase 251, 252 umfasst, die formschlüssig in einer Doppellochung gehalten werden kann. Die Nase umfasst eine Nasenspitze 251, die als Widerhaken dient, und einen Nasenkamm, der als Rampe dient. Die Verbindungsplatte 21 bzw. 22 kann daher mit dem Verbindungshaken 250 an eine Seitenwand 12 angelegt werden, so dass die Nase mit dem Nasenkamm 252 in die erste Wandöffnung 121 einer Doppellochung eingreift. Durch Verschieben der Verbindungsplatte 22 wird der Verbindungshaken 250 automatisch durch die erste Wandöffnung 121 hindurchgeführt und kann in die zweite Wandöffnung 122 der Doppellochung relaxieren. In der Folge umgreift die Nasenspitze 251 den zwischen den Wandöffnungen 121, 122 liegenden Steg 123 und kann nur noch mittels eines Werkzeugs gelöst werden.

## Patentansprüche

1. Vorrichtung (2) zum Verbinden wenigstens eines ersten und eines zweiten Kabelbahnabschnitts (1A, 1B), die je wenigstens ein Bodenelement (13; 131, 132) und beidseits daran anschliessende erste und zweite Seitenwände (11, 12) umfassen und die nach deren Verbindung koaxial zu einer gemeinsamen Bahnachse (x) ausgerichtet eine Kabelbahn (1) bilden, mit einer ersten und einer zweiten Verbindungsplatte (21; 22), welche die Endbereiche der einander zugewandten ersten bzw. zweiten Seitenwände (11; 12) beider Kabelbahnabschnitte (1A, 1B) übergreifen und die je eine Reihe von Haken (211; 221) aufweisen, die in Wandöffnungen (111; 121) eingreifen, die in den Seitenwänden (11; 12) der Kabelbahnabschnitte (1A, 1B) vorgesehen sind, und die je mittels wenigstens eines Verbindungselements (23; 25; 2210) fixierbar sind, und dass die an der ersten Verbindungsplatte (21) vorgesehenen Haken (211) und die an der zweiten Verbindungsplatte (22) vorgesehenen Haken (221) zumindest annähernd parallel zur Bahnachse (x) ausgerichtet sind und in entgegengesetzte Richtungen weisen, **dadurch gekennzeichnet, dass**
die erste Verbindungsplatte (21) und die zweite Verbindungsplatte (22) an einem Ende je eine vorzugsweise rechteckige Montageöffnung (212; 222) aufweisen, die im Rasterabstand der Haken (211; 221) angeordnet ist und in die ein Verbindungsbolzen (251) eingesetzt ist, dessen Gewindeschaft, durch die zugehörige Montageöffnung (212; 222) und eine der Wandöffnungen (111; 121) in den Seitenwänden (11; 12) der Kabelbahnabschnitte (1A, 1B) hindurch geführt und mit einer Schraubenmutter (252) verbunden ist.

2. Verbindungsvorrichtung (2) nach Anspruch 1, **dadurch gekennzeichnet, dass** die erste Verbindungsplatte (21) mit dem ersten oder dem zweiten Kabelbahnabschnitt (1A, 1B) verbunden ist und dass die zweite Verbindungsplatte (22) mit dem ersten oder dem zweiten Kabelbahnabschnitt (1A, 1B) verbunden ist.

3. Verbindungsvorrichtung (2) nach Anspruch 1 oder 2, **dadurch gekennzeichnet, dass** die erste Verbindungsplatte (21) an der Innenseite oder der Aussenseite der zugehörigen Seitenwände (11) angeordnet ist und dass die zweite Verbindungsplatte (22) an der Innenseite oder der Aussenseite der zugehörigen Seitenwände (12) angeordnet ist.

4. Verbindungsvorrichtung (2) nach Anspruch 1, 2 oder 3, **dadurch gekennzeichnet, dass** die erste Verbindungsplatte (21) und die zweite Verbindungsplatte (22) die einander zugewandten ersten bzw. zweiten Seitenwände (11; 12) der Kabelbahnabschnitte (1A; 1B) etwa um dasselbe Mass überlappen.

5. Verbindungsvorrichtung (2) nach einem der Ansprüche 1 - 4, **dadurch gekennzeichnet, dass** die erste Verbindungsplatte (21) und die zweite Verbindungsplatte (22) mit derselben Anzahl Haken (211; 221) in die einander zugewandten ersten bzw. zweiten Seitenwände (11; 12) der Kabelbahnabschnitte (1A; 1B) eingreifen.

6. Verbindungsvorrichtung (2) nach einem der Ansprüche 1-5, **dadurch gekennzeichnet, dass** jede der beiden Verbindungsplatten (21, 22) eine Anzahl von Haken (211; 221) aufweist die im Bereich von 4 - 12 liegen.

7. Verbindungsvorrichtung (2) nach einem der Ansprüche 1-6, **dadurch gekennzeichnet, dass** die Haken (211; 221) denselben Rasterabstand aufweisen, wie die zugeordneten Wandöffnungen (111; 121) in den ersten und zweiten Seitenwänden (11, 12), und vorzugsweise entlang einer Gerade ausgerichtet sind.

8. Verbindungsvorrichtung (2) nach einem der Ansprüche 1-7, **dadurch gekennzeichnet, dass** der Verbindungsbolzen (251) anschliessend an den Gewindeschaft ein vorzugsweise rechteckiges Schaftelement (2511) aufweist, das formschlüssig in die Montageöffnung (212; 222) der ersten bzw. zweiten Verbindungsplatte (21, 22) einführbar ist.

9. Verbindungsvorrichtung (2) nach einem der Ansprüche 1-8, **dadurch gekennzeichnet, dass** die Verbindungsplatten (21, 22) aus einem federelastischen Material gefertigt sind und/oder dass wenigstens einer der Haken (211; 221) vorzugsweise wenigstens ein Verbindungshaken (250) federelastisch ausgestaltet ist und dass die Seitenwände (11; 12) Kopplungselemente (1210) aufweisen, die zusammen mit den Haken (211; 221) einen Verschluss bilden können.

10. Verbindungsvorrichtung (2) nach Anspruch 9, **dadurch gekennzeichnet, dass** anschliessend an eine erste Wandöffnung (111, 121) eine zweite Wandöffnung (122) oder eine Einformung derart vorgesehen ist, dass der Haken (211; 221) bzw. der Verbindungshaken (250) in die Wandöffnung (122) oder die Einformung eingreifen oder den zwischen der ersten Wandöffnung (111, 121) und der zweiten Wandöffnung (122) bzw. der Einformung liegenden Steg (123) vorzugsweise umgreifen kann.

11. Kabelbahn (1) mit wenigstens zwei koaxial zu einer gemeinsamen Bahnachse (x) ausgerichteten Kabelbahnabschnitten (1A, 1B), die wenigstens ein Bodenelement (13; 131, 132) und beidseits daran anschliessende erste und zweite Seitenwände (11, 12) umfassen, und die durch eine Verbindungsvorrichtung (2) nach einem der Ansprüche 1 - 10 miteinander verbundene sind.

12. Kabelbahn (2) nach Anspruch 11, **dadurch gekennzeichnet, dass** eine erste und eine zweite Verbindungsplatte (21; 22) vorgesehen sind, welche die Endbereiche der einander zugewandten ersten bzw. zweiten Seitenwände (11; 12) beider Kabelbahnabschnitte (1A, 1B) übergreifen und die je eine Reihe von Haken (211; 221) aufweisen, die in Wandöffnungen (111; 121) eingreifen, die in den einander zugewandten ersten bzw. zweiten Seitenwänden (11; 12) der Kabelbahnabschnitte (1A, 1B) vorgesehen sind, und die je mittels wenigstens eines Verbindungselements (23; 25) fixiert sind, wobei die an der ersten Verbindungsplatte (21) vorgesehenen Haken (211) und die an der zweiten Verbindungsplatte (22) vorgesehenen Haken (221) zumindest annähernd parallel zur Bahnachse (x) ausgerichtet sind und in entgegengesetzte Richtungen weisen.

13. Kabelbahn (2) nach Anspruch 12, **dadurch gekennzeichnet, dass** die Kabelbahnabschnitte (1A, 1B)
a) aus einem Gitter mit Längsstegen und Querstegen gefertigt sind; oder
b) einstückig aus einem Metallblech geformt sind; oder
c) aus Metallblech geformte Seitenwände (11, 12) aufweisen, die durch Stege, wie metallene C-Profilträger, miteinander verbunden sind, die das Bodenelement (13) bilden.

## Claims

1. Device (2) for connecting at least a first and a second cable tray section (1A, 1B),
which comprise each at least one bottom element (13; 131, 132) and first and second sidewalls (11, 12) on both sides adjoining thereto and
which form, after their connection, coaxially aligned with a common cable tray axis (x) a cable tray (1), with a first and a second connecting plate (21; 22),
which overlap the terminal regions of the first or second sidewalls (11; 12), respectively, of both cable tray sections (1A, 1B) that are facing one another and
which comprise each a row of hooks (211; 221) that engage in wall openings (111; 121) provided in the sidewalls (11; 12) of the cable tray sections (1A, 1B), and
which can be fixed each by means of at least one connecting element (23; 25; 2210), and that the hooks (211) provided at the first connecting plate (21) and the hooks (221) provided at the second connecting plate (22) are aligned at least approximately in parallel to the cable tray axis (x) and point in opposite directions, **characterised in that**
the first connecting plate (21) and the second connecting plate (22) comprise each a preferably rectangular mounting opening (212; 222) at one end that is arranged in accordance with the grid spacing of the hooks (211; 221) and into which a connecting bolt (251) is inserted, whose threaded shaft is guided through the related mounting opening (212; 222) and one of the wall openings (111; 121) in den sidewalls (11; 12) of the cable tray sections (1A, 1B) and is connected with a screw nut (252).

2. Connecting device (2) according to claim 1, **characterised in that** the first connecting plate (21) is connected with the first or the second cable tray section (1A, 1B) and that the second connecting plate (22) is connected with the first or the second cable tray section (1A, 1B).

3. Connecting device (2) according to claim 1 or 2, **characterised in that** the first connecting plate (21) is arranged at the inner side or the outer side of the related sidewalls (11) and that the second connecting plate (22) is arranged at the inner side or the outer side of the related sidewalls (12).

4. Connecting device (2) according to claim 1, 2 or 3, **characterised in that** the first connecting plate (21) and the second connecting plate (22) overlap the first or second sidewalls (11; 12) of the cable tray sections (1A; 1B), respectively, which are facing one another, approximately by the same degree.

5. Connecting device (2) according to one of the claims 1 - 4, **characterised in that** the first connecting plate (21) and the second connecting plate (22) are engaged with the same number hooks (211; 221) in the first or second sidewalls (11; 12) of the cable tray sections (1A; 1B), respectively, which are facing one another.

6. Connecting device (2) according to one of the claims 1-5, **characterised in that** each of the two connecting plates (21, 22) comprises a number of hooks (211; 221) in the range from 4 - 12.

7. Connecting device (2) according to one of the claims 1-6, **characterised in that** the hooks (211; 221) have the same grid spacing as the related wall openings (111; 121) in den first and second sidewalls (11, 12), and are preferably aligned along a straight.

8. Connecting device (2) according to one of the claims 1-7, **characterised in that** the connecting bolt (251) comprises adjacent to the threaded shaft a preferably rectangular shaft element (2511), which can be inserted in a form locking manner into the mounting opening (212; 222) of the first or second connecting plate (21, 22), respectively.

9. Connecting device (2) according to one of the claims 1-8, **characterised in that** the connecting plates (21, 22) are made from a spring-elastic material and/or that at least one the hooks (211; 221) preferably at least one connecting hook (250) is made spring elastic and that the sidewalls (11; 12) comprise coupling elements (1210) that, together with the hooks (211; 221) form a latch.

10. Connecting device (2) according to claim 9, **characterised in that** adjacent to the first wall opening (111, 121) a second wall opening (122) or a spheroidisation is provided in such a way that the hook (211; 221) or the connecting hooks (250), respectively, can engage in the wall opening (122) or the spheroidisation or can preferably encompass the ridge (123) between the first wall opening (111, 121) and the second wall opening (122) or the spheroidisation respectively.

11. Cable tray (1) with at least two cable tray sections (1A, 1B) which are coaxially aligned along a common cable tray axis (x), which comprise at least one bottom element (13; 131, 132) and first and second sidewalls (11, 12) on both sides adjacent thereto, and which are connected with one another by a connecting device (2) according to one of the claims 1 - 10.

12. Cable tray (2) according to claim 11, **characterised in that** a first and a second connecting plate (21; 22) are provided,
which overlap the terminal regions of the first or second sidewalls (11; 12) of both cable tray sections (1A, 1B), respectively, that are facing one another, and
which comprise each a row of hooks (211; 221) that engage in wall openings (111; 121) provided in in first or second sidewalls (11; 12) of the cable tray sections (1A, 1B), respectively, which are facing one another, and
which are fixed each by means of at least one connecting element (23; 25),
wherein the hooks (211) provided at the first connecting plate (21) and the hooks (221) provided at the second connecting plate (22) are aligned in parallel to the cable tray axis (x) and point in opposite directions.

13. Cable tray (2) according to claim 12, **characterised in that** the cable tray sections (1A, 1B)
a) are made from a great consisting of longitudinal bars and transversal bars; or
b) are made in one piece from sheet metal; or
c) comprise sidewalls (11, 12) formed from sheet metal that are connected with one another by traverses, such as metal C-profiled beams, which form the bottom element (13).

## Revendications

1. Dispositif (2) pour connecter au moins une première et une deuxième section du chemin de câble (1A, 1B), qui comprennent chacun au moins un élément de base (12; 121) et une première et deuxième paroi (11) qui se joignent des deux côtés à l'élément de base (12; 121) et qui forment après leur connexion coaxial à leur axe de chemin (x) commun un chemin de câble (1), avec une première et une deuxième plaque de connexion (21; 22), qui dépassent les régions terminales de la première resp. de la deuxième paroi latérale (11; 12) orientées l'une vers l'autre des deux sections du chemin de câble (1A; 1B) et qui présentent chacune une rangé de crochets (211; 221), qui interviennent dans des ouvertures dans la paroi (111; 121), qui sont prévus dans les parois latérales (11; 12) des sections du chemin de câble (1A, 1B), et qui peuvent être fixé chacun avec au moins un élément de connexion (23; 25; 2210), et que les crochets (221) prévus sur la première plaque de connexion (21) et les crochets (221) prévus sur la deuxième plaque de connexion (22) sont au moins à peu près orientés parallèle à l'axe du chemin (x) et pointent dans des directions opposées, **caractérisé en ce que**
la première plaque de connexion (21) et la deuxième plaque de connexion (22) présentent à un bout chacun une ouverture de montage (212; 222) de préférence réctangulaires, qui est arrangée selon la distance de trame des crochets (211; 221) et dans laquelle un boulon de connexion (251) est introduit, dont la tige filetée est dirigée à travers l'ouverture de montage correspondante (212; 222) et une des ouvertures dans la paroi (111; 121) dans les parois latérales (11; 12) des section du chemin de câble (1A, 1B) et connectée à un écrou (252).

2. Dispositif de connexion (2) selon la revendication 1, **caractérisé en ce que** la première plaque de connexion (21) est connectée à la première ou la deuxième section du chemin de câble (1A, 1B) et que la deuxième plaque de connexion (22) est connectée à la première ou la deuxième section du chemin de câble (1A, 1B).

3. Dispositif de connexion (2) selon la revendication 1 ou 2, **caractérisé en ce que** la première plaque de connexion (21) est arrangé sur le côté intérieur ou le côté extérieur de la paroi latérale (11) correspondante et que la deuxième plaque de connexion (22) est arrangé sur le côté intérieur ou le côté extérieur de la paroi latérale (12) correspondante.

4. Dispositif de connexion (2) selon la revendication 1, 2 ou 3, **caractérisé en ce que** la première plaque de connexion (21) et la deuxième plaque de connexion (22) dépassent la première resp. la deuxième paroi latérale (11; 12) orientées l'une vers l'autre des sections du chemin de câble (1A; 1B) à peu près de la même distance.

5. Dispositif de connexion (2) selon une des revendications 1 - 4, **caractérisé en ce que** la première plaque de connexion (21) et la deuxième plaque de connexion (22) interviennent avec le même nombre de crochets (211; 221) dans la première resp. dans la deuxième paroi latérale (11; 12) orientées l'une vers l'autre des sections du chemin de câble (1A; 1B).

6. Dispositif de connexion (2) selon une des revendications 1-5, **caractérisé en ce que** chacune des plaques de connexion (21, 22) présentent un nombre de crochets (211; 221) qui est contenu dans l'intervalle de 4 - 12.

7. Dispositif de connexion (2) selon une des revendications 1-6, **caractérisé en ce que** les crochets (211; 221) présentent le même distance de trame comme les ouvertures dans la paroi (111; 121) correspondantes dans la première et la deuxième paroi latérale (11, 12), et sont orientés de préférence le long d'une droite.

8. Dispositif de connexion (2) selon une des revendications 1-7, **caractérisé en ce que** le boulon de connexion (251) présent après la tige filetée un élément de tige (2511) de préférence rectangulaire, qui peut être introduit à ajustement de forme dans l'ouverture de montage (212; 222) de la première resp. de la deuxième plaque de connexion (21, 22).

9. Dispositif de connexion (2) selon une des revendications 1-8, **caractérisé en ce que** les plaques de connexion (21, 22) sont formées d'un matériaux élastique à ressort et/ou qu'au moins un des crochets (211; 221) de préférence au moins un crochet de connexion (250) est conçu de manière élastique à ressort et que les parois latérales (11; 12) présentent des éléments d'accouplement (1210), qui peuvent former une fermeture avec les crochets (211; 221).

10. Dispositif de connexion (2) selon la revendication 9, **caractérisé en ce que** voisinant à la première ouverture dans la paroi (111, 121) une deuxième ouverture dans la paroi (122) ou une empreinte est prévue de manière à ce que le crochet (211; 221) resp. le crochet de connexion (250) intervient dans l'ouverture dans la paroi (122) ou dans l'empreinte ou puisse de préférence encercler la traverse (123) étant placé entre la première ouverture dans la paroi (111, 121) et la deuxième ouverture dans la paroi (122) resp. l'empreinte.

11. Chemin de câble (1) avec au moins deux sections du chemin de câble (1A, 1B) coaxiales à un axe du chemin (x) commun, lesdites sections du chemin de câble (1A, 1B) comprenant au moins un élément de base (12; 121) et une première et deuxième parois (11) se joignant des deux côtés à l'élément de base (12; 121), et qui sont connectées ensemble par un dispositif de connexion (2) selon une des revendications 1 - 10.

12. Chemin de câble (2) selon la revendication 11, **caractérisé en ce qu**'une première et une deuxième plaque de connexion (21; 22) sont prévues, qui chevauchent les régions de terminaison qui sont orientées l'une vers l'autre de la première resp. de la deuxième paroi latérale (11; 12) des deux sections du chemin de câble (1A, 1B) et qui présentent chacune une rangé de crochets (211; 221), qui interviennent dans des ouvertures dans la paroi (111; 121), qui sont prévus dans la première resp. la deuxième paroi latérale (11; 12) orientées l'une vers l'autre des deux sections du chemin de câble (1A, 1B), et qui sont fixés chacun par au moins un élément de connexion (23; 25), les crochets (211) prévus sur la première plaque de connexion (21) et les crochets (221) prévus sur la deuxième plaque de connexion (22) étant au moins à peu près orientés parallèle à l'axe du chemin (x) et pointent dans des directions opposés.

13. Chemin de câble (2) selon la revendication 12, **caractérisé en ce que** les sections du chemin de câble (1A, 1B)
a) sont formées d'une grille avec des barrettes transversales et longitudinales; ou
b) sont formées en une pièce d'une feuille métallique; ou
c) présentent des parois latérales (11, 12) formées d'une feuille métallique, qui sont reliées ensemble par des barrettes, comme des profils métalliques en forme de C, qui forment l'élément de base (13).
